# EUROPEAN PATENT APPLICATION

(11) **EP 2 520 513 A1**
(43) Date of publication of application: **07.11.2012**
(21) Application number: 10840999.6
(22) Date of filing: 27.12.2010
(51) Int. Cl.: B65D 81/26, B32B 27/18, B65D 65/02, C08L 29/04, C08L 77/00

(54) **RESIN COMPOSITION FOR PACKAGES SUBJECTED TO HEAT STERILIZATION, FILM FOR PACKAGES SUBJECTED TO HEAT STERILIZATION, AND PROCESS FOR PRODUCING SAME**

(30) Priority: 28.12.2009 JP 2009296915
(71) Applicant: Zeon Corporation, Tokyo 100-8246 (JP)
(72) Inventor: KITAHARA, Shizuo, Tokyo 100-8246 (JP); FUJII, Kensaku, Tokyo 100-8246 (JP)
(74) Representative: Albrecht, Thomas
(86) International application number: PCT/JP2010/073585
(87) International publication number: WO 2011/081143

(57) **Abstract**

An object of the present invention is to provide a packaging material for heat sterilization treatment, in which a decrease in the oxygen absorption capacity until the time of a heat sterilization treatment is prevented, a sufficient oxygen absorption capacity is exhibited at the time of a heat sterilization treatment, and odor that is generated along with oxygen absorption is suppressed. To attain the object, the present invention provides a resin composition for a package to be subjected to heat sterilization, comprising an oxygen absorptive resin composition dispersed in an oxygen barriering matrix resin, wherein the oxygen absorptive resin composition comprises a conjugated diene polymer cyclized product, the oxygen absorptive resin composition has a glass transition temperature of 31°C to 55°C, and the oxygen barriering matrix resin is at least one resin selected from an ethylene-vinyl alcohol copolymer resin and a polyamide resin.

## Description

### Technical Field

The present invention relates to a resin composition for a package to be subjected to heat sterilization, a film for a package to be subjected to heat sterilization using the composition, and a method for producing the film. More particularly, the present invention relates to a resin composition for a package to be subjected to heat sterilization, which is used to package contents such as food products that are to be subjected to heat sterilization for the purpose of sterilization, and is suitably used to obtain a packaging material that can reduce the amount of oxygen in the interior at the time of heat sterilization treatment, a film for a package to be subjected to heat sterilization using the composition, and a method for producing the film.

### Background Art

As food products that can be stored for long time periods, food products which have been subjected to heat sterilization such as a boiling treatment and a retort treatment are widely distributed. However, if oxygen remains in the interior of the packaging container at the time of heat sterilization treatment, there is a problem that this oxygen causes oxidation of food, and the flavor or color tone characteristic to the food is impaired. Accordingly, in the case of filling a food to be subjected to heat sterilization in a packaging container, an inert gas such as nitrogen is filled together in the head space of the packaging container.

However, the filling of an inert gas in the food filling process is not desirable from the viewpoint of productivity or economic efficiency. For that reason, a packaging container which can reduce the amount of oxygen in the interior at the time of heat sterilization treatment even if the filling of an inert gas is omitted, is desired. As packaging containers having such a function, for example, packaging containers having, at least as a part of the packaging container, a part formed from a layer having oxygen absorbency, which is produced by incorporating an oxygen absorbent such as an iron powder into a thermoplastic resin such as polyethylene or polypropylene, and a layer having oxygen barrier properties, which is laminated on the outside of the foregoing layer, as described in Patent Literatures 1 to 3, have been suggested.

In the packaging containers disclosed in Patent Literatures 1 to 3, since the oxygen in the interior of the packaging container is absorbed by the layer having oxygen absorbency of the packaging container before the heat sterilization treatment or in the middle of the heat sterilization treatment, oxidation of foods at the time of the heat sterilization treatment can be prevented. However, in the case of constructing a layer having oxygen absorbency by incorporating an oxygen absorbent such as an iron powder into a thermoplastic resin such as polyethylene or polypropylene as described in Patent Literatures 1 to 3, there is a problem that, because oxygen absorption by the oxygen absorbent occurs even at a temperature below normal temperature, the oxygen absorbent is consumed even in the period from during the production of the packaging container or after the production of the packaging container, to the implementation of the heat sterilization treatment. Therefore, in the case of using such a packaging container, there are various restrictions on the production techniques for the packaging container, or on the handling of the packaging container in the period from after the production of the packaging container to the heat sterilization treatment. Furthermore, in the case of using the oxygen absorbents disclosed in Patent Literatures 1 to 3, there is a problem that odor is generated when the oxygen absorbent absorbs oxygen, and the flavor of the contents is impaired.

Patent Literature 4 suggests a retort packaging material having a layer formed from an oxygen absorptive resin composition, which is constituted by incorporating a transition metal salt into a thermoplastic resin such as polyoctenylene to make the thermoplastic resin susceptible to oxidation, and dispersing the thermoplastic resin in a matrix resin having gas barrier properties, such as an ethylene-vinyl alcohol copolymer. In this retort packaging material, since a thermoplastic resin that functions as an oxygen absorbent is dispersed in a matrix resin having gas barrier properties, the consumption amount of the oxygen absorbent at normal temperature is smaller compared to the packaging containers of Patent Literatures 1 to 3. However, even when the packaging material disclosed in Patent Literature 4 is used, the problem of the consumption of the oxygen absorbent in the period from during the production of the packaging container or after the production of the packaging container, to the implementation of heat sterilization treatment is not completely solved, and there is also a problem that odor is generated when the oxygen absorbent absorbs oxygen.

However, one of the inventors of the present invention has suggested, in Patent Literature 5, an oxygen absorptive gas barrier resin composition containing a conjugated diene polymer cyclized product and an ethylene-vinyl alcohol copolymer having a specific value of oxygen permeability. This oxygen absorptive gas barrier resin composition exhibits excellent oxygen barrier properties; however, when this resin composition is used as a layer having oxygen absorbency in a packaging container that is to be subjected to heat sterilization, the oxygen absorbency of the layer is not satisfactory, and the amount of oxygen in the interior at the time of a heat sterilization treatment cannot be sufficiently reduced.

Furthermore, one of the inventors of the present invention together with other co-inventors have suggested, in Patent Literature 6, an oxygen absorptive barrier resin composition which comprises an oxygen absorptive resin having a cycloene structure in the molecule and a softening agent and has a glass transition temperature of 30°C or lower, and a resin having gas barrier properties such as an ethylene-vinyl alcohol copolymer, wherein the oxygen absorptive resin composition is incorporated into the resin having gas barrier properties. This oxygen absorptive barrier resin composition has excellent oxygen absorbency even at normal temperature. However, when used as a layer having oxygen absorbency contained in a package to be subjected to heat sterilization, the oxygen absorptive resin composition is consumed in the period from during the production of the packaging container or after the production of the packaging container to the implementation of a heat sterilization treatment, and there is a risk that the oxygen absorption capacity may be decreased until the time of implementation of the heat sterilization treatment.

### Citation List

### Patent Literature

Patent Literature 1: Japanese Patent Application Publication Laid-Open (JP-A) No. H09-040024
Patent Literature 2: JP-A No. 2006-282259
Patent Literature 3: JP-A No. 2008-207818
Patent Literature 4: JP-A No. 2008-201432
Patent Literature 5: International Publication NO. 2006/101021
Patent Literature 6: International Publication NO.2007/094247

### Summary of Invention

### Technical Problem

It is an object of the present invention to provide a resin composition for a package to be subjected to heat sterilization, which is suitably used as a packaging material capable of reducing the amount of oxygen in the interior at the time of a heat sterilization treatment, can prevent a decrease in the oxygen absorption capacity until the time of a heat sterilization treatment, can exhibit a sufficient oxygen absorption capacity at the time of a heat sterilization treatment, and can suppress an odor that is generated along with oxygen absorption.

### Solution to Problem

The inventors of the present invention has conducted a thorough investigation in order to achieve the object described above, and as a result, the inventors found that when a particular resin is used as oxygen barriering matrix resin, and an oxygen absorptive resin composition containing a conjugated diene polymer cyclized product having a specific glass transition temperature is dispersed in the matrix resin, an oxygen absorptive composition which exhibits a sufficient oxygen absorption capacity without generating strong odor under the relatively high temperature and high humidity conditions at the time of a heat sterilization treatment, and in which the oxygen absorptive resin composition is not easily consumed under the relatively low temperature and low humidity conditions before the heat sterilization treatment, is obtained. The present invention has been completed based on this finding.

Thus, according to the present invention, there is provided a resin composition for a package to be subjected to heat sterilization, comprising an oxygen absorptive resin composition dispersed in an oxygen barriering matrix resin, wherein the oxygen absorptive resin composition comprises a conjugated diene polymer cyclized product, the glass transition temperature of the oxygen absorptive resin composition is 31°C to 55°C, and the oxygen barriering matrix resin is at least one resin selected from an ethylene-vinyl alcohol copolymer resin and a polyamide resin.

Furthermore, according to the present invention, there is provided a film for a package to be subjected to heat sterilization, comprising an oxygen absorbing layer that is formed from the above-mentioned resin composition for a package to be subjected to heat sterilization, a sealant layer that is laminated on a first surface side of the oxygen absorbing layer, and an oxygen barrier layer that is laminated on a second surface side of the oxygen absorbing layer.

Furthermore, according to the present invention, there is provided a method for producing the above-mentioned film for a package to be subjected to heat sterilization, comprises a laminate step of the oxygen absorbing layer and the oxygen barrier layer by: adhering of the oxygen absorbing layer and the oxygen barrier layer by a dry lamination system, with a laminate adhesive layer interposed therebetween, and then aging an adhered laminate under the conditions of a temperature of 0°C to 60°C and a relative humidity of 30% to 65%.

### Advantageous Effects of Invention

According to the present invention, a resin composition for a package to be subjected to heat sterilization, which is suitably used as a packaging material capable of reducing the amount of oxygen in the interior at the time of a heat sterilization treatment, and can prevent a decrease in the oxygen absorption capacity until the time of a heat sterilization treatment, can exhibit a sufficient oxygen absorption capacity at the time of a heat sterilization treatment, and can suppress an odor that is generated along with oxygen absorption, may be obtained.

### Description of Embodiments

The resin composition for a package to be subjected to heat sterilization of the present invention may be obtained by dispersing a particular oxygen absorptive resin composition in a particular oxygen barriering matrix resin. The oxygen absorptive resin composition used in the present invention is a resin composition containing a conjugated diene polymer cyclized product and other components that are optionally added, and is a resin composition which can exhibit oxygen absorbency as a result of oxidation of the conjugated diene polymer cyclized product.

According to the present invention, the conjugated diene polymer cyclized product used as the resin that constitutes the oxygen absorptive resin composition is a compound obtainable by subjecting a conjugated diene polymer to a cyclization reaction in the presence of an acid catalyst, and has a cyclic structure in the molecule, while having at least one double bond in the cyclic structure.

As the conjugated diene polymer that is used to obtain the conjugated diene polymer cyclized product, a homopolymer of a conjugated diene monomer, a copolymer of two or more kinds of conjugated diene monomers, and a copolymer of a conjugated diene monomer and another monomer capable of copolymerizing with the conjugated diene monomer, can be used. The conjugated diene monomer is not particularly limited, and specific examples thereof include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, and 3-butyl-1,3-octadiene. These monomers may be used singly, or two or more kinds thereof may be used in combination.

Examples of other monomer capable of copolymerizing with the conjugated diene monomer include aromatic vinyl monomers such as styrene, o-methylstyrene, p-methylstyrene, m-methylstyrene, 2,4-dimethylstyrene, ethylstyrene, p-tert-butylstyrene, α-methylstyrene, α-methyl-p-methylstyrene, o-chlorostyrene, m-chlorostyrene, p-chlorostyrene, p-bromostyrene, 2,4-dibromostyrene, and vinylnaphthalene; linear olefin monomers such as ethylene, propylene and 1-butene; cyclic olefin monomers such as cyclopentene, and 2-norbornene; non-conjugated diene monomers such as 1,5-hexadiene, 1,6-heptadiene, 1,7-octadiene, dicyclopentadiene, and 5-ethylidene-2-norbornene; (meth)acrylic acid esters such as methyl (meth)acrylate and ethyl (meth) acrylate; and other (meth)acrylic acid derivatives such as (meth)acrylonitrile and (meth)acrylamide. These monomers may be used singly, or two or more kinds thereof may be used in combination. Furthermore, there are no particular limitations on the mode of copolymerization, and for example, the copolymer may be a block copolymer or may be a random copolymer.

Specific examples of the conjugated diene polymer include natural rubber (NR), styrene-isoprene rubber (SIR), styrene-butadiene rubber (SBR), polyisoprene rubber (IR), polybutadiene rubber (BR), isoprene-isobutylene copolymer rubber (IIR), ethylene-propylene-diene-based copolymer rubber (EPDM), butadiene-isoprene copolymer rubber (BIR), styrene-isoprene block polymer, and styrene-butadiene block polymer. Among these, polyisoprene rubber, polybutadiene rubber, and styrene-isoprene block polymer are preferably used, and polyisoprene rubber and styrene-isoprene block polymer are more preferably used, while polyisoprene rubber is most preferably used. These conjugated diene polymers may be used singly, or two or more kinds thereof may be used in combination.

The content of the conjugated diene monomer unit in the conjugated diene polymer is not particularly limited, but the content is usually 40 mol% or greater, preferably 60 mol% or greater, and more preferably 80 mol% or greater. The method for producing the conjugated diene polymer may be carried out according to a conventional method. For example, a conjugated diene polymer may be obtained by polymerizing a conjugated diene monomer by a solution polymerization method or an emulsion polymerization method, while using an appropriate catalyst such as a Ziegler-type polymerization catalyst, an alkyllithium polymerization catalyst or a radical polymerization catalyst. Furthermore, a conjugated diene polymer produced by performing polymerization using a Ziegler-type polymerization catalyst, and then metathetically decomposing the polymer using a catalyst such as ruthenium or tungsten, can also be used.

The conjugated diene polymer cyclized product may be obtained by subjecting a conjugated diene polymer such as described above to a cyclization reaction in the presence of an acid catalyst. As the acid catalyst that is used in the cyclization reaction, known catalysts can be used. Specific examples of the acid catalyst include sulfuric acid; organic sulfonic acid compounds such as fluoromethanesulfonic acid, difluoromethanesulfonic acid, p-toluenesulfonic acid, xylenesulfonic acid, alkylbenzenesulfonic acid having an alkyl group of 2 to 18 carbon atoms, anhydrides and alkyl esters thereof; and Lewis acids such as boron trifluoride, boron trichloride, tin tetrachloride, titanium tetrachloride, aluminum chloride, diethylaluminum monochloride, ethylammonium chloride, aluminum bromide, antimony pentachloride, tungsten hexachloride, and iron chloride. These acid catalysts may be used singly, or two or more kinds thereof may be used in combination. Furthermore, tertiary butyl chloride or trichloroacetic acid may also be used in combination as a co-catalyst. Among these, organic sulfonic acid compounds are preferably used, and p-toluenesulfonic acid or xylenesulfonic acid is more preferably used. The amount of use of the acid catalyst is usually 0.05 part to 10 parts by weight, preferably 0.1 part to 5 part by weight, and more preferably 0.3 part to 2 parts by weight, per 100 parts by weight of the conjugated diene polymer.

The cyclization reaction is usually carried out by dissolving a conjugated diene polymer in a solvent. The solvent is not particularly limited as long as it does not impede the cyclization reaction, but hydrocarbon solvents, such as aromatic hydrocarbons such as benzene, toluene, xylene and ethylbenzene; aliphatic hydrocarbons such as n-pentane, n-hexane, n-heptane and n-octane; and alicyclic hydrocarbons such as cyclopentane and cyclohexane are preferably used. The boiling point of these hydrocarbon solvents is preferably 70°C or higher. The solvent used in the polymerization reaction of the conjugated diene polymer and the solvent used in the cyclization reaction may be of the same kind. In this case, the cyclization reaction can be carried out subsequently to the polymerization, after adding an acid catalyst for cyclization reaction to the polymerization reaction liquid in which the polymerization reaction has been terminated. The amount of use of the hydrocarbon solvent is such that the solids concentration of the conjugated diene polymer is usually in the range of 5% to 60% by weight, and preferably in the range of 20% to 40% by weight.

The cyclization reaction can be carried out at any pressure, such as under pressure, under reduced pressure, and at atmospheric pressure, but from the viewpoint of the convenience of operation, it is preferable to carry out the reaction at atmospheric pressure. When the cyclization reaction is carried out under a dry gas stream, particularly in an atmosphere of dry nitrogen or dry argon, side reactions that are caused by moisture can be suppressed. The reaction temperature or reaction time for the cyclization reaction is not particularly limited. The reaction temperature is usually 50°C to 150°C, and preferably 70°C to 110°C, and the reaction time is usually 0.5 hour to 10 hours, and preferably 2 hours to 5 hours. After the cyclization reaction is performed, the acid catalyst is deactivated by a conventional method, the acid catalyst residues are removed, subsequently the hydrocarbon solvent is removed, and thereby, a solid conjugated diene polymer cyclized product can be obtained.

The unsaturated bond reduction ratio of the conjugated diene polymer cyclized product used to constitute the oxygen absorptive resin composition is not particularly limited, but the unsaturated bond reduction ratio is preferably 56% or greater, more preferably 59% to 80%, and particularly preferably 62% to 75%. When a conjugated diene polymer cyclized product having the unsaturated bond reduction ratio in such a range is used, the generation of odor resulting from the oxygen absorption of the oxygen absorptive resin composition can be further suppressed. Meanwhile, two or more kinds of conjugated diene polymer cyclized products having different unsaturated bond reduction ratios can be used in combination as the conjugated diene polymer cyclized product.

The unsaturated bond reduction ratio of the conjugated diene polymer cyclized product is an index indicating the extent by which the number of unsaturated bonds in the conjugated diene monomer unit portion in the conjugated diene polymer is reduced by the cyclization reaction, and is a value that can be determined as follows. That is, the ratio of the peak area of protons that are directly bound to double bonds with respect to the total peak area of protons in the conjugated diene monomer unit portion in the conjugated diene polymer is determined before and after the cyclization reaction by a proton NMR analysis, and the reduction ratio is calculated. Specifically, the unsaturated bond reduction ratio of the conjugated diene polymer cyclized product can be determined as will be described below. That is, when the total peak area of protons before the cyclization reaction in the conjugated diene monomer unit portion in the conjugated diene polymer is designated as SBT, the peak area of protons that are directly bound to double bonds before the cyclization reaction is designated as SBU, the total peak area of protons after the cyclization reaction is designated as SAT, and the peak area of protons that are directly bound to double bonds after the cyclization reaction is designated as SAU, the peak area ratio (SB) of protons that are directly bound to double bonds before the cyclization reaction is represented by the formula: SB = SBU/SBT, and the peak area ratio (SA) of protons that are directly bound to double bonds after the cyclization reaction is represented by the formula: SA = SAU/SAT. Further, the unsaturated bond reduction ratio can be determined by the formula: unsaturated bond reduction ratio (%) = 100 x (SB - SA)/SB.

The unsaturated bond reduction ratio of the conjugated diene polymer cyclized product can be controlled by appropriately selecting factors such as the amount of the acid catalyst, the reaction temperature, and the reaction time in the cyclization reaction of the conjugated diene polymer.

The weight average molecular weight of the conjugated diene polymer cyclized product is, as a value calculated relative to polystyrene standards as measured by gel permeation chromatography, usually 1,000 to 1,000,000, preferably 50,000 to 500,000, and more preferably 80,000 to 300,000. The weight average molecular weight of the conjugated diene polymer cyclized product can be controlled by appropriately selecting the weight average molecular weight of the conjugated diene polymer that is submitted to cyclization. Meanwhile, when the conjugated diene polymer cyclized product is a conjugated diene/aromatic vinyl monomer copolymer cyclized product, the weight average molecular weight of the aromatic vinyl polymer block is preferably 1,000 to 300,000. When the weight average molecular weight of the conjugated diene polymer cyclized product is appropriately set, an appropriate value of the solution viscosity at the time of the cyclization reaction may be obtained, and the processability or mechanical strength of the resulting resin composition for a package to be subjected to heat sterilization may be improved.

The content of gel in the conjugated diene polymer cyclized product is, as the content of the toluene-insoluble fraction, usually 10% by weight or less, and preferably 5% by weight or less, and it is particularly preferable that the conjugated diene polymer cyclized product substantially does not contain any gel. If the gel content is large, the processability of the resulting resin composition for a package to be subjected to heat sterilization may be deteriorated.

There are no particular limitations on the glass transition temperature of the conjugated diene polymer cyclized product used to constitute the oxygen absorptive resin composition, but from the viewpoint of having the glass transition temperature of the oxygen absorptive resin composition in a desired range, the glass transition temperature of the conjugate diene polymer cyclized product is preferably 31°C or higher, and more preferably 50°C to 80°C. The glass transition temperature of the conjugated diene polymer cyclized product can be controlled by adjusting the unsaturated bond reduction ratio of the conjugated diene polymer cyclized product, or the like, in accordance with the type of the conjugated diene polymer used to obtain the conjugated diene polymer cyclized product.

The glass transition temperature of the oxygen absorptive resin composition used in the present invention is 31°C to 55°C, more preferably 31°C to 50°C, even more preferably 31°C to 40°C, and most preferably 33°C to 39°C. When the glass transition temperature of the oxygen absorptive resin composition is adjusted to this range, in the case of constructing a packaging container using the resulting resin composition for a package to be subjected to heat sterilization, the oxygen absorption by the oxygen absorptive resin composition in the period from during the production or after the production of the packaging container to the implementation of a heat sterilization treatment is suppressed, and the packaging container may exhibit excellent oxygen absorbency at the time of the heat sterilization treatment. If the glass transition temperature of the oxygen absorptive resin composition is too low, oxygen absorption by the oxygen absorptive resin composition occurs even in the period from during the production or after the production of the packaging container to the implementation of a heat sterilization treatment, and as a result, the oxygen absorptive resin composition is consumed. Thus, there is a risk that sufficient oxygen absorbency may not be exhibited at the time of the heat sterilization treatment. On the other hand, if the glass transition temperature is too high, it becomes difficult for the oxygen absorptive resin composition to exhibit oxygen absorbency, and there is a risk that the resulting packaging container may not exhibit sufficient oxygen absorbency even at the time of the heat sterilization treatment.

If the glass transition temperature of the conjugated diene polymer cyclized product to be used is not in the range of the glass transition temperature of the oxygen absorptive resin composition described above, the glass transition temperature of the oxygen absorptive resin composition can be controlled by adding components having compatibility with the resin. For example, if the glass transition temperature of the conjugated diene polymer cyclized product is higher than the glass transition temperature of the oxygen absorptive resin composition described above, the glass transition temperature of the oxygen absorptive resin composition can be controlled by adding a softening agent. Meanwhile, the softening agent used therein needs to have compatibility with the conjugated diene polymer cyclized product, and it is preferable that the softening agent be incompatible with the oxygen barriering matrix resin that will be described below.

As the softening agent, a liquid substance having a glass transition temperature of the substance itself of -30°C or lower is suitably used, and specific examples thereof include hydrocarbon oils such as isoparaffin-based oils, naphthene-based oils, and liquid paraffin; olefin polymers (of low molecular weights) such as polybutene, polyisobutylene, atactic polypropylene, ethylene-α-olefin copolymers (such as linear low-density polyethylene (LLDPE), and linear very low-density polyethylene (LVLDPE)); hydrogenation products (of low molecular weights) of conjugated diene polymers such as polyisoprene and polybutadiene; hydrogenation products (of low molecular weights) of styrene-conjugated diene polymers; fatty acids such as erucic acid; and fatty acid esters. Among them, hydrocarbon oils, olefin polymers, and fatty acids are preferably used, and liquid paraffin is particularly preferably used. These softening agents may be used singly, or two or more kinds thereof may be used in combination.

The amount of incorporation of the softening agent is determined in accordance with the types or mixing ratios of the various components of the oxygen absorptive resin composition so that the glass transition temperature of the oxygen absorptive resin composition can be adjusted to a desired range, but the amount of incorporation is usually 0% to 30% by weight, preferably 1% to 20% by weight, and more preferably 3% to 15% by weight, relative to the total amount of the oxygen absorptive resin composition.

The oxygen absorptive resin composition may contain an oxidation inhibitor as necessary. When an oxidation inhibitor is incorporated into the resin, the stability of the oxygen absorptive resin composition is enhanced, and handling at the time of processing or the like is made easier. The content of the oxidation inhibitor in the oxygen absorptive resin composition is not particularly limited, but the content is usually 5000 ppm by weight or less, preferably 3000 ppm by weight or less, more preferably 2000 ppm by weight or less, and particularly preferably 500 ppm by weight or less. If the content of the oxidation inhibitor is too large, there is a risk that the oxygen absorption of the oxygen absorptive resin composition may be hindered.

The oxidation inhibitor is not particularly limited as long as it is conventionally used in the field of resin materials or rubber materials. Representative examples of such an oxidation inhibitor include hindered phenol-based, phosphorus-based, and lactone-based oxidation inhibitors. These oxidation inhibitors can be used in combination of two or more kinds. Even among these, it is preferable to use a phosphorus-based oxidation inhibitor. Meanwhile, an amine-based light stabilizer (HALS) may also be added in addition to these oxidation inhibitors.

In the oxygen absorptive resin composition, another resin may also be incorporated in addition to the conjugated diene polymer cyclized product. For example, when a poly-α-olefin resin is incorporated, the mechanical strength of the resulting composition can be improved. The poly-α-olefin resin may be any of a homopolymer of an α-olefin, a copolymer of two or more kinds of α-olefins, and a copolymer of an α-olefin and a monomer other than an α-olefin, or may be a modification product of such a (co)polymer. Specific examples of the poly-α-olefin resin include linear low-density polyethylene (LLDPE), low-density polyethylene (LDPE), medium-density polyethylene (MDPE), high-density polyethylene (HDPE), metallocene polyethylene, polypropylene, metallocene polypropylene, polymethylpentene, polybutene, an ethylene-propylene random copolymer, an ethylene-propylene block copolymer, an ethylene-propylene-polybutene-1 copolymer, and an ethylene-cyclic olefin copolymer. The poly-α-olefin resin may be used singly, or two or more kinds thereof may be used in combination.

Furthermore, an oxidation catalyst which accelerates the oxidation reaction of the conjugated diene polymer cyclized product may also be added to the oxygen absorptive resin composition. Representative examples of the oxidation catalyst include salts of transition metals such as manganese, iron, cobalt, nickel, copper, rhodium, and ruthenium. Examples of the form of the transition metal salt include chlorides, acetates, stearates, palmitates, ethyl 2-ethylhexanoate, neodecanoates, and naphthoates. However, since the conjugated diene polymer cyclized product used to constitute the oxygen absorptive resin composition according to the present invention is a resin which exhibits sufficient oxygen absorbency even in the absence of an oxidation catalyst, the addition of an oxidation catalyst is not essentially necessary, and from the viewpoint of suppressing the generation of odor resulting from oxidation absorption, it is preferable that a transition metal salt (oxidation catalyst) be substantially not contained in the oxygen absorptive resin composition.

In the oxygen absorptive resin composition, other components may be further incorporated as necessary. Specific examples of the other components that may be incorporated include a filler such as calcium carbonate, alumina or titanium oxide; a tackifier (a hydrogenated petroleum resin, a hydrogenated terpene resin, a castor oil derivative, sorbitan higher fatty acid ester, or low molecular weight polybutene); a surfactant; a leveling agent; an ultraviolet absorber; a light stabilizer; a dehydrating agent; a pot life extending agent (such as acetylacetone, methanol, or methyl orthoacetate); and a repelling improving agent.

The oxygen absorption rate of the oxygen absorptive resin composition used to constitute the resin composition for a package to be subjected to heat sterilization of the present invention is not particularly limited, but it is preferable that the oxygen absorption rate at 30°C be 0.01 cc/100 cm² per day or higher. Here, according to the present invention, the oxygen absorption rate of the oxygen absorptive resin composition is determined in a manner such that a film having a thickness of 20 µm is formed from the oxygen absorptive resin composition to be tested, and the oxygen absorption rate is defined as the volume (unit: cc) of oxygen absorbed by the film per unit area (100 cm²) in a day (24 hours) when the film is stored in a certain volume of dry air at 30°C under atmospheric pressure. If an oxygen absorptive resin composition having an excessively low oxygen absorption rate is used, the oxygen absorption capacity of the resulting resin composition for a package to be subjected to heat sterilization may be insufficient.

In the resin composition for a package to be subjected to heat sterilization of the present invention, the oxygen barriering matrix resin used to disperse the oxygen absorptive resin composition is at least one resin selected from an ethylene-vinyl alcohol copolymer resin and a polyamide resin. In the resin composition for a package to be subjected to heat sterilization of the present invention, when at least one resin selected from an ethylene-vinyl alcohol copolymer resin and a polyamide resin is used as an oxygen barriering matrix resin, a good balance is achieved between the prevention of a decrease in the oxygen absorption capacity until the time of the heat sterilization treatment and the exhibition of a sufficient oxygen absorption capacity at the time of the heat sterilization treatment.

The ethylene-vinyl alcohol copolymer resin that can be used as an oxygen barriering matrix resin is structurally a copolymer having ethylene and vinyl alcohol as main constituent units, but the copolymer resin is usually a product obtainable by partially or completely saponifying a copolymer of ethylene and a fatty acid vinyl ester using an alkali catalyst or the like. There are no particular limitations on the fatty acid vinyl ester that is copolymerized with ethylene, but a representative example is vinyl acetate, and vinyl propionate, vinyl pivalate or the like may also be used. Furthermore, the method of saponifying a copolymer of ethylene and a fatty acid vinyl ester is also not particularly limited. Also, the ethylene-vinyl alcohol copolymer may also be a modified ethylene-vinyl alcohol copolymer using a monovalent epoxy compound having a molecular weight of 500 or less, such as 1,2-epoxybutane, 2,3-epoxybutane, epoxypropane, epoxyethane or glycidol.

For the ethylene-vinyl alcohol copolymer, the ethylene unit content is not particularly limited, but the content is preferably 20 mol% to 60 mol%, and more preferably 25 mol% to 50 mol%. When the ethylene unit content of the ethylene-vinyl alcohol copolymer is in this range, in the resulting resin composition for a package to be subjected to heat sterilization, the balance between the prevention of a decrease in the oxygen absorption capacity until the time of heat sterilization treatment and the oxygen absorption capacity at the time of heat sterilization treatment is further improved. Meanwhile, the ethylene unit content of the ethylene-vinyl alcohol copolymer can be determined by a nuclear magnetic resonance (NMR) method.

The degree of saponification of the vinyl ester part of the ethylene-vinyl alcohol copolymer (the ratio of the monomer unit portion having a vinyl alcohol structure with respect to the sum of the monomer unit portion having a vinyl alcohol structure and the monomer unit portion having a vinyl ester structure) is not particularly limited, but the degree of saponification is preferably 95 mol% or higher, more preferably 96 mol% or higher, and particularly preferably 99 mol% or higher. Because an ethylene-vinyl alcohol copolymer having such a degree of saponification has satisfactory thermal stability, when a resin composition for a package to be subjected to heat sterilization that is obtainable by using the ethylene-vinyl alcohol copolymer is molded, foreign substances such as gel do not appear. Meanwhile, the degree of saponification of the ethylene-vinyl alcohol copolymer can be determined by a nuclear magnetic resonance (NMR) method.

The ethylene vinyl alcohol copolymer may be used singly, or two or more kinds thereof may be used in combination. When the two or more kinds having different ethylene unit contents are used in combination, the ethylene unit content in a mixture of ethylene-vinyl alcohol copolymers can be determined from the mixing weight ratios of the copolymers. Furthermore, the degree of saponification in a mixture of ethylene-vinyl alcohol copolymers when the two or more kinds having different degrees of saponification are used in combination can be determined from the mixing weight ratios of the copolymers.

Although not particularly limited, it is preferable to select the melt flow rate (MFR) of the ethylene-vinyl alcohol copolymer in the range of 1.5 to 15 g/10 min (210°C, under a load of 2160 g).

The polyamide resin that can be used as an oxygen barriering matrix resin is not particularly limited as long as it is a resin containing amide bonds in the polymer main chain, but an aliphatic, alicyclic or semi-aromatic polyamide derived from a dicarboxylic acid component and a diamine component, polyamide derived from aminocarboxylic acids or lactams thereof, copolyamide of these polyamides, or a blend of these polyamides may be suitably used.

Examples of the dicarboxylic acid component for synthesizing a polyamide resin include aliphatic dicarboxylic acids having 4 to 15 carbon atoms, such as succinic acid, adipic acid, sebacic acid, decanedicarboxylic acid, undecanedicarboxylic acid, and dodecanedicarboxylic acid; and aromatic dicarboxylic acids such as terephthalic acid and isophthalic acid. Furthermore, examples of the diamine component include linear or branched alkylenediamines having 4 to 25 carbon atoms, particularly 6 to 18 carbon atoms, such as 1,6-diaminohexane, 1,8-diaminooctane, 1,10-diaminodecane, and 1,12-diaminododecane; alicyclic diamines such as bis(aminomethyl)cyclohexane, bis(4-aminocyclohexyl)methane, 4,4'-diamino-3,3'-dimethyldicyclohexylmethane, particularly bis(4-aminocyclohexyl)methane_{;} 1,3-bis(aminocyclohexyl)methane, and 1,3-bis(aminomethyl)cyclohexane; and aromatic diamines such as m-xylylenediamine and/or p-xylylenediamine. Examples of the aminocarboxylic acid component include aliphatic aminocarboxylic acids such as α,β,ω-aminocaproic acid, ω-aminooctanoic acid, ω-aminoundecanoic acid, and ω-aminododecanoic acid; and aromatic aminocarboxylic acids such as p-aminomethylbenzoic acid and p-aminophenylacetic acid.

Specific examples of the polyamide resin include poly-ε-caprolactam (polyamide 6), polyundecaneamide (polyamide 11), polylauryl lactam (polyamide 12), polyhexamethylene adipamide (polyamide 66), polyhexamethylene dodecamide (polyamide 612), caprolactam/lauryl lactam copolymer (polyamide 6/12), and caprolactam/hexamethylenediammonium adipate copolymer (polyamide 6/66). Among these polyamide resins, polyamide 6, polyamide 6/12, and polyamide 6/66 are suitably used. These polyamide resins may be used singly, or two or more kinds thereof may be used in combination.

The viscosity number of the polyamide resin is not particularly limited, but it is preferable to select the viscosity number in the range of 160 to 320 ml/g.

The oxygen barriering matrix resin is preferably such that its oxygen permeation rate is 0.15 to 30 cc/m²·day·atm when measured under the conditions of 23°C and a relative humidity of 5% in a film having a thickness of 20 µm. It is also preferable that the oxygen barriering matrix resin be incompatible with any of the various components (particularly, resins and softening agent) of the oxygen absorptive resin composition.

In the oxygen barriering matrix resin, other components may be further incorporated as necessary. Specific examples of the other components that can be incorporated include a thermal stabilizer; an ultraviolet absorber; a colorant; a pigment; a neutralizer; a plasticizer such as a phthalic acid ester or a glycol ester; a filler such as calcium carbonate, alumina or titanium oxide; a tackifier (a hydrogenated petroleum resin, a hydrogenated terpene resin, a castor oil derivative, sorbitan higher fatty acid ester, or low molecular weight polybutene); a surfactant; a leveling agent; an ultraviolet absorber; a light stabilizer; a dehydrating agent; a pot life extending agent (such as acetylacetone, methanol or methyl orthoacetate); and a repelling improving agent.

The resin composition for a package to be subjected to heat sterilization of the present invention has an oxygen absorptive resin composition dispersed in an oxygen barriering matrix resin. The method of dispersing an oxygen absorptive resin composition in an oxygen barriering matrix resin is not particularly limited, and any known technique may be employed. However, from the viewpoint of the convenience of process or the cost, a melt kneading method is suitably used. Meanwhile, when an oxygen absorptive resin composition is dispersed in an oxygen barriering matrix resin, it is not necessary to have the respective components mixed in advance, and it is acceptable to achieve a state in which an oxygen absorptive resin composition is dispersed in an oxygen barriering matrix resin by mixing the individual components in a lump or sequentially in any order.

In the resin composition for a package to be subjected to heat sterilization of the present invention, the mixing ratio of the oxygen absorptive resin composition and the oxygen barriering matrix resin is not particularly limited, but the weight ratio of the oxygen absorptive resin composition/oxygen barriering matrix resin is preferably 5/95 to 50/50, and more preferably 20/80 to 40/60. When the weight ratio of the oxygen absorptive resin composition/oxygen barriering matrix resin is in this range, a particularly satisfactory balance is achieved between the oxygen absorption capacity of the resulting resin composition for a package to be subjected to heat sterilization and the degree of suppression of odor generation.

In the resin composition for a package to be subjected to heat sterilization of the present invention, a compatibilizer or a dispersion stabilizer may be incorporated. Specific examples of the compatibilizer/dispersion stabilizer include hydrocarbon-based polymers containing polar groups, which are obtained by modifying styrene-based polymers, such as maleic anhydride-modified polypropylene, polyethylene, styrene-diene-based block copolymers (such as a styrene-isoprene block copolymer, a styrene-butadiene copolymer, and a styrene-isoprene-styrene block copolymer), and hydrogenation products thereof. Furthermore, in the resin composition for a package to be subjected to heat sterilization of the present invention, other components such as a blocking preventing agent, an antifogging agent, a heat resistant stabilizer, a weather resistant stabilizer, a lubricating agent, an antistatic agent, a reinforcing agent, a flame retardant, a coupling agent, a foaming agent, and a releasing agent can be added as necessary.

When the oxygen absorptive resin composition is dispersed in the oxygen barriering matrix resin, the apparatus used in the case of employing a melt kneading method is not particularly limited, but examples include a continuous type kneader such as a continuous type intensive mixer, a (co-rotating or counter-rotating) kneading type twin-screw extruder, a mixing roll, or a co-kneader; a batch type kneader such as a high speed mixer, a Banbury mixer, an intensive mixer, or a pressure kneader; an apparatus using a rotating disk having a grinding mechanism such as a stone mortar, such as a KCK kneading extruder manufactured by KCK Co. , Ltd. ; a single-screw extruder provided with a kneading unit (such as Dulmadge or CTM); and a simple type kneading machine such as a ribbon blender or a Brabender mixer. When a film for a package to be subjected to heat sterilization that will be described below is obtained using a resin composition for a package to be subjected to heat sterilization of the present invention, it is suitable to use a twin-screw extruder. The kneading temperature is usually in the range of 50°C to 300°C, and preferably in the range of 170°C to 240°C.

The resin composition for a package to be subjected to heat sterilization of the present invention that is obtained as described above is used as a material of packaging materials such as a packaging container for packaging a content such as foods, and is used to treat a content by heat sterilization while the content is packaged. The resin composition for a package to be subjected to heat sterilization of the present invention exhibits a sufficient oxygen absorption capacity under the conditions of relatively high temperature and high humidity at the time of a heat sterilization treatment, but under the conditions of relatively low temperature and low humidity before the treatment, the oxygen absorptive resin composition is not easily consumed. Therefore, the resin composition for a package to be subjected to heat sterilization can be suitably used as a material for packaging materials for reducing the amount of oxygen in the interior at the time of a heat sterilization treatment.

The heat sterilization treatment is usually carried out at a temperature of 60°C or higher, and representative examples include a retort treatment (carried out under pressure at a temperature in the range of 100°C to 135°C) and a boiling treatment (carried out at normal pressure at or below 100°C). Furthermore, the content to be packaged by a packaging material using the resin composition for a package to be subjected to heat sterilization is not particularly limited as long as the content is an object to be subjected to heat sterilization, but a content containing moisture is preferred. It is because when the environmental humidity is high, the oxygen barriering matrix resin becomes highly permeable to oxygen, and as a result, the absorption of oxygen by the oxygen absorptive resin composition dispersed in the oxygen barriering matrix resin easily occurs at the time of a heat sterilization treatment.

The form of the packaging material using the resin composition for a package to be subjected to heat sterilization is not particularly limited, but from the viewpoint of the ease of process or preventing the penetration of oxygen from the outside during or after the heat sterilization treatment, it is preferable to constitute a packaging material through the form of a film for a package to be subj ected to heat sterilization of the present invention that will be described below.

The film for a package to be subjected to heat sterilization of the present invention is a film comprising an oxygen absorbing layer that is formed from the resin composition for a package to be subjected to heat sterilization of the present invention, a sealant layer that is laminated on a first surface side of the oxygen absorbing layer, and an oxygen barrier layer that is laminated on a second surface side of the oxygen absorbing layer.

The oxygen absorbing layer is a layer formed from the resin composition for a package to be subjected to heat sterilization of the present invention described above. The thickness of the oxygen absorbing layer is not particularly limited, and may be set in accordance with the required amount of oxygen absorption. However, the thickness is set in the range of usually 5 µm to 100 µm, and preferably 10 µm to 30 µm.

The sealant layer is a layer that is laminated on one surface side of the oxygen absorption layer formed from the resin composition for a package to be subjected to heat sterilization, and is a layer which has a function of forming, inside the package, a space blocked from the outside by melting under heat and adhering to each other (heat sealed), and transmits oxygen to be absorbed by the oxygen absorbing layer while preventing the oxygen layer and the content inside the package from being brought into direct contact. The material having heat sealability used to construct the sealant layer is usually constituted of a thermoplastic resin, and specific examples thereof include polyethylenes such as low-density polyethylene, medium-density polyethylene, high-density polyethylene, linear low-density polyethylene, and metallocene polyethylene; homopolymers of α-olefins, such as polypropylene, poly-4-methyl-1-pentene, and poly-1-butene; copolymers of ethylene and α-olefins, such as an ethylene-propylene copolymer; copolymers of ethylene or an α-olefin and other monomers (unsaturated carboxylic acids such as itaconic acid, methacrylic acid, acrylic acid, and maleic anhydride, salts thereof, partial or complete esters thereof, nitriles thereof, amides thereof, and anhydrides thereof; carboxylic acid vinyl esters such as vinyl formate, vinyl acetate, vinyl propionate, vinyl butyrate, vinyl octanoate, vinyl dodecanoate, vinyl stearate, and vinyl arachidonate; vinylsilane-based compounds such as vinyltrimethoxysilane; unsaturated sulfonic acid or salts thereof; alkylthiols; and vinylpyrrolidones); acid-modified polyolefin resins produced by modifying a polyethylene or an α-olefin (co)polymer with an unsaturated carboxylic acid such as acrylic acid, methacrylic acid, maleic acid, maleic anhydride, fumaric acid, or itaconic acid; and ionomer resins produced by subjecting a copolymer of ethylene and methacrylic acid or the like to the action of Na ion or Zn ion. Among these, polyethylene or polypropylene is preferably used. These thermoplastic resins may be used singly, or two or more kinds may be used in combination.

In the sealant layer, an oxidation inhibitor; a tackifier (such as a hydrogenated petroleum resin, a hydrogenated terpene resin, a castor oil derivative, sorbitan higher fatty acid ester, or low molecular weight polybutene); an antistatic agent; a filler; a plasticizer (such as phthalic acid ester or a glycol ester); a surfactant; a leveling agent; a heat resistant stabilizer; a weather resistant stabilizer; an ultraviolet absorber; a light stabilizer; a dehydrating agent; a pot life extending agent (such as acetylacetone, methanol, or methyl orthoacetate); a repelling improving agent; an anti-blocking agent; an antifogging agent; a lubricating agent; a reinforcing agent; a flame retardant; a coupling agent; a foaming agent; a releasing agent; a colorant; a pigment; and the like can be added as necessary.

The thickness of the sealant layer is not particularly limited, but the thickness is set in the range of usually 30 µm to 200 µm, and preferably 40 µm to 80 µm.

The oxygen barrier layer is a layer that is laminated on the other surface side (the opposite surface side of the surface where the sealant layer is laminated) of the oxygen absorbing layer formed from the resin composition for a package to be subjected to heat sterilization, and the oxygen barrier layer being a layer which is provided to reduce the amount of oxygen penetration into the oxygen absorbing layer or the interior of the package from the outside of the package. The material used to construct the oxygen barrier layer is not particularly limited as long as it is a material having low oxygen permeability, and a metal, an inorganic material, a resin and the like are used. Examples of the metal used as the oxygen barrier layer include aluminum. The metal may be used in the form of being laminated as a foil on another film such as a resin film, or may be used in the form of being formed into a thin film on another film by deposition or the like. Examples of the inorganic material used as the oxygen barrier layer include metal oxides such as silica and alumina, which, for example, can be used in the form of being deposited on another film such as a resin film. Furthermore, in the deposited film thus obtainable, for example, an overcoat layer formed from a polyvinyl alcohol/silane compound-based material may be provided for the purpose of further enhancing the oxygen barrier properties, or a primer layer may be provided in order to enhance the adhesiveness between another film and the deposited film. Examples of the resin used as the oxygen barrier layer include polyvinyl alcohol resins such as polyvinyl alcohol, and an ethylene-vinyl alcohol copolymer; polyester resins such as polyethylene terephthalate and polybutylene terephthalate; polyamide resins such as polyamide 6, polyamide 66, polyamide 610, polyamide 11, polyamide 12, and polyamide MXD6; polyaramide resins; polycarbonate resins; polystyrene resins; polyacetal resins; fluororesins; polyether-based, adipate ester-based, caprolactone ester-based, polycarbonic acid ester-based thermoplastic polyurethanes and the like; halogenated vinyl resins such as polyvinylidene chloride, and polyvinyl chloride; polyacrylonitriles; poly-α-olefin resins such as an ethylene-vinyl acetate copolymer, an ethylene-ethyl acrylate copolymer, an ethylene-methyl methacrylate copolymer, an ethylene-acrylic acid copolymer, and an ethylene-methacrylic acid copolymer; acid-modified polyolefin resins produced by modifying polyethylene or an α-olefin (co) polymer with an unsaturated carboxylic acid such as acrylic acid, methacrylic acid, maleic acid, maleic anhydride, fumaric acid, or itaconic acid; ionomer resins produced by subjecting a copolymer of ethylene and methacrylic acid or the like to the action of Na ion or Zn ion; and mixtures thereof.

As the oxygen barrier layer, a film formed by chemical vapor deposition using a gas of an organosilane such as hexamethylenedisiloxane, or a compound serving as a carbon source, such as acetylene, can be used.

As the oxygen barrier layer, a layer which exhibits high oxygen barrier properties even under relatively high humidity conditions is particularly preferably used, and specific examples thereof include films having layers of a metal or an inorganic material. Furthermore, when it is necessary to make the film for a package to be subjected to heat sterilization transparent, it is preferable to use a so-called transparent vapor-deposited film as the oxygen barrier layer.

The thickness of the oxygen barrier layer is not particularly limited, and may be set in accordance with factors such as the required oxygen barrier performance or the material to be used. In the case of using a film formed by vapor-depositing an inorganic material on a resin film as the oxygen barrier layer, the thickness of the vapor-deposited film of the inorganic material is set in the range of usually 0.001 µm to 1 µm, and preferably 0.01 µm to 0.2 µm.

The film for a package to be subjected to heat sterilization of the present invention may be a film formed to include layers other than the oxygen absorbing layer, the sealant layer and the oxygen barrier layer. Furthermore, the lamination of the oxygen absorbing layer, the sealant layer and the oxygen barrier layer may be such that the respective layers may be directly laminated, or may be laminated with other layers interposed therebetween. Examples of the other layers that can constitute the film for a package to be subjected to heat sterilization include an adhesive layer, a protective layer, and a supporting base material layer.

An adhesive layer is, for example, a layer disposed between the oxygen absorbing layer and the sealant layer or the oxygen barrier layer in order to make these layers adhere to each other. As the material used as the adhesive layer, an adhesive resin may be used, and specific examples thereof include polyolefins such as polyethylene and polypropylene; an ethylene-vinyl acetate copolymer, an ethylene-acrylic acid copolymer, an ethylene-ethyl acrylate copolymer, an ethylene-methacrylic acid copolymer, an ethylene-methyl methacrylate copolymer, and compounds produced by modifying (addition, grafting, or the like) these polymers with, for example, an unsaturated carboxylic acid or an anhydride thereof such as maleic anhydride acid. Among these, a polymer modified with an unsaturated carboxylic acid or an anhydride thereof is preferably used, and a polyolefin modified with an unsaturated carboxylic acid or an anhydride thereof is particularly preferably used. Meanwhile, the adhesive resin can also be used in the form of being incorporated into the oxygen absorbing layer, the sealant layer, the oxygen barrier layer and the like so as to improve the adhesiveness of these layers.

The thickness of the adhesive layer is not particularly limited, but the thickness is usually set in the range of 2 µm to 10 µm.

A protective layer is a layer provided for the purpose of protecting the film for a package to be subjected to heat sterilization by imparting heat resistance or the like to the film for a package to be subjected to heat sterilization. As the material used as the protective layer, a thermoplastic resin may be used, and specific examples thereof include an ethylene polymer such as high-density polyethylene; a propylene polymer such as a propylene homopolymer, a propylene-ethylene random copolymer, or a propylene-ethylene block copolymer; a polyamide such as polyamide 6 or polyamide 66; a polyester such as polyethylene terephthalate, polybutylene terephthalate, or polyethylene naphthalate; a polyvinyl chloride; a polystyrene; a polyacrylonitrile; a polycarbonate; a polyacrylate; and a polyketone. Among these, it is preferable to use a polyamide or a polyester.

A supporting base material layer is a layer provided for the purpose of improving the shape retentivity by imparting mechanical strength to the film for a package to be subjected to heat sterilization. Examples of the material used as the supporting base material layer include a polyolefin resin; a polyester resin such as polyethylene terephthalate (PET); a polyamide resin such as polyamide 6, or a polyamide 6-polyamide 66 copolymer; a natural fiber; a synthetic fiber; and paper obtainable by papermaking these fibers.

The layer configuration of the film for a package to be subjected to heat sterilization is not particularly limited as long as the configuration comprises an oxygen absorbing layer that is formed from the resin composition for a package to be subjected to heat sterilization, a sealant layer that is laminated on a first surface side of the oxygen absorbing layer, and an oxygen barrier layer that is laminated on a second surface side of the oxygen absorbing layer. Specific examples of the layer configuration include, when the sealant layer is designated as S, the oxygen absorbing layer as Oa, the oxygen barrier layer as Ob, the adhesive layer as Ad layer, the protective layer as P, and the supporting base material layer as B, S/Oa/Ob, S/Ad/Oa/Ob, S/Oa/Ad/Ob, S/Ad/Oa/Ad/Ob, S/Ad/Oa/Ad/S/Ad/B/Ob, S/Ad/Oa/Ad/S/Ad/B/Ad/Ob, and S/Ad/Oa/Ad/S/Ad/Ob, but the examples are not intended to be limited to these.

The overall thickness of the film for a package to be subjected to heat sterilization is not particularly limited, but the thickness is set in the range of usually 40 µm to 300 µm, and preferably 60 µm to 200 µm.

Upon the production of the film for a package to be subjected to heat sterilization of the present invention, there are no particular limitations on the method of forming the various layers, and the method of laminating the various layers, and known techniques may be applied in accordance with the respective materials. Examples of the method of forming the various layers include an extrusion lamination forming method, an extrusion cast forming method, an inflation forming method, and a solution casting method. Furthermore, examples of the method of laminating (adhering) the various layers include lamination methods such as a dry lamination system, a wet lamination system, and a non-solvent lamination system. However, upon the production of the film for a package to be subjected to heat sterilization of the present invention, it is preferable to perform the lamination of the oxygen absorbing layer (may include other layers) and the oxygen barrier layer (may include other layers) by a dry lamination system which can be applied to various materials, and among others, it is preferable to perform the lamination by a dry lamination system under the conditions described below.

That is, the method for producing the film for a package to be subjected to heat sterilization of the present invention is characterized in that upon the production of the film for a package to be subjected to heat sterilization of the present invention, the lamination step of the oxygen absorbing layer and the oxygen barrier layer is carried out by adhering the layers by a dry lamination system with a laminate adhesive layer interposed therebetween, and subsequently aging the adhered laminate under the conditions of a temperature of 40°C to 60°C and a relative humidity of 0% to 65%.

In order to make the oxygen absorbing layer adhere to the oxygen barrier layer by a dry lamination system, first, a laminate adhesive dissolved in a solvent is applied on at least one of the surfaces of the oxygen absorbing layer and the oxygen barrier layer using a gravure roll or the like, the solvent of the laminate adhesive is volatilized to form a laminate adhesive layer, and a layer is laminated on the laminate adhesive layer to adhere thereto using a nip roll or the like. Meanwhile, examples of the laminate adhesive used in this case include the adhesive resins described above as the material that can constitute the adhesive layer. Furthermore, there are no particular limitations on the solvent of the laminate adhesive, but for example, a solvent containing an alcohol such as methanol, ethanol, isopropanol or n-propanol as a main ingredient can be used.

When the oxygen absorbing layer and the oxygen barrier layer having adhered as described above are subjected to aging, the residual solvent remaining in the adhesive layer can be removed, and thereby the adhesion can be made strong and firm. At this time, if the aging conditions are set in the range of a temperature of 40°C to 60°C and a relative humidity of 0% to 65%, a balance can be achieved between the strong adhesion of the oxygen absorbing layer and the oxygen barrier layer, and the prevention of oxygen absorption of the oxygen absorptive resin composition constituting the oxygen absorbing layer (that is, consumption of the oxygen absorbing resin composition) during the aging process. If the temperature or relative humidity in the aging process is too high, oxygen absorption is effected by the oxygen absorptive resin composition during the aging process, and thereby the oxygen absorptive resin composition is consumed up, so that there is a risk that a sufficient oxygen absorption capacity may not be exhibited at the time of the heat sterilization treatment. On the other hand, if the temperature of the aging conditions is too low, there is a risk that the adhesive power between the oxygen absorbing layer and the oxygen barrier layer may be insufficient. Meanwhile, the time for performing aging is not particularly limited, but the time is usually in the range of 12 to 240 hours, and preferably 24 to 168 hours.

In the case of adhering the oxygen absorbing layer and the oxygen barrier layer by a dry lamination system, it is preferable, from the viewpoint of productivity, to have another layer that is used to constitute the film for a package to be subjected to heat sterilization, laminated in advance on the oxygen absorbing layer or the oxygen barrier layer. Therefore, it is preferable to laminate the sealant layer, which is an essential layer for the film for a package to be subjected to heat sterilization, in advance with the oxygen absorbing layer to obtain a laminate, and then to laminate the laminate with the oxygen barrier layer. As a technique for obtaining a laminate of the oxygen absorbing layer and the sealant layer, multilayer inflation forming is suitable.

The film for a package to be subjected to heat sterilization of the present invention can be fabricated into packaging containers and packaging materials of various forms, and for example, the film can be fabricated into packaging containers of a pouch (bag shape), a box shape, or a cup shape, or alternatively, can be fabricated into packaging materials such as a film for a package or a cover. Among these, the film for a package to be subjected to heat sterilization of the present invention is suitably used to obtain a pouch for a package to be subjected to heat sterilization.

In order to obtain a pouch for package to be subjected to heat sterilization using the film for a package to be subjected to heat sterilization of the present invention, the sealant layer of the film for a package to be subjected to heat sterilization may be heat-sealed by a known technique, and the film may be fabricated into a pouch shape. The form of the pouch is not particularly limited, and forms of conventional pouches, pouches with gadgets, standing pouches, and pillow packaging bags and the like can be employed.

The packaging container or packaging material obtainable by using the film for a package to be subjected to heat sterilization of the present invention can be used to heat sterilization, in which the content is treated while the content is packaged. There are no particular limitations on the content to be packaged as long as the content is to be subjected to heat sterilization, and examples include food products such as curry, soup, stew, porridge, pasta sauce, donburi ingredients, hamburger steak, meatballs, and nourishing foods for care receivers; and pharmaceutical products such as infusion fluids. The technique for the heat sterilization treatment is also not particularly limited, but a retort treatment (carried out under pressure at a temperature in the range of 100°C to 135°C) and a boiling treatment (carried out under normal pressure at or below 100°C) are suitably employed. The conditions for the retort treatment and the boiling treatment are not particularly limited as long as the conditions are conventionally used conditions for these treatments. For the retort treatment, a recovery type method, a vapor type method, a shower type method, a spray type method and the like can be employed.

In the packaging container or packaging material using the film for a package to be subjected to heat sterilization of the present invention, a decrease in the oxygen absorption capacity until the time of heat sterilization treatment is prevented, and a sufficient oxygen absorption capacity is exhibited at the time of the heat sterilization treatment. Therefore, during the heat sterilization treatment, the oxygen concentration inside the package is sufficiently lowered, and oxidation of the contents can be prevented to a high level.

### Examples

Hereinafter, the present invention will be more specifically described by way of Examples and Comparative Examples. Meanwhile, the units "parts" and "percent (%)" in the various examples are on a weight basis, unless particularly stated otherwise.

Various measurements were carried out according to the following methods.

### [Weight molecular weight (Mw) of conjugated diene polymer cyclized product]

The weight average molecular weight was determined using gel permeation chromatography, as a molecular weight relative to polystyrene standards.

### [Unsaturated bond reduction ratio of conjugated diene polymer cyclized product]

The unsaturated bond reduction ratio was determined by a proton NMR analysis, with reference to the methods described in (i) M.A. Golub and J. Heller, Can. J. Chem., Vol. 41, 937 (1963) and (ii) Y. Tanaka and H. Sato, J. Polym. Sci.: Poly. Chem. Ed., Vol. 17, 3027 (1979). Meanwhile, when the total proton peak area before the cyclization reaction in the conjugated diene monomer unit portion in the conjugated diene polymer is designated as SBT; the peak area of protons that are directly bound to double bonds before the cyclization reaction is designated as SBU; the total proton peak area after the cyclization reaction is designated as SAT; and the peak area of protons that are directly bound to double bonds after the cyclization reaction is designated as SAU, the peak area ratio (SB) of protons that are directly bound to double bonds before the cyclization reaction is represented by the formula: SB = SBU/SBT, and the peak area ratio (SA) of protons that are directly bound to double bonds after the cyclization reaction is represented by the formula: SA = SAU/SAT. Therefore, the unsaturated bond reduction ratio can be determined by the formula: unsaturated bond reduction ratio (%) = 100 x (SB - SA)/SB.

### [Glass transition temperature]

The glass transition temperature was measured using a differential scanning calorimeter (manufactured by Seiko Instruments, Inc., "EXSTR600 DSC™"), under a nitrogen gas stream at a rate of temperature increase of 10°C/min.

### [Oxygen concentration]

The oxygen concentration inside a pouch was measured by extracting some of the gas inside the pouch using a syringe, and using an oxygen concentration meter (manufactured by Ceramatec, Inc., "Food Checker HS-750T™").

### [Odor level]

The odor was evaluated by a sensory test participated by five testers, based on the following criteria, and the average point was designated as the odor level.
No odor is perceived: Evaluation point 1
An odor is slightly perceived: Evaluation point 2
A slightly sour odor is perceived: Evaluation point 3
A sour odor is strongly perceived: Evaluation point 4
A sour odor is very strongly perceived: Evaluation point 5

### [Preparation Example 1]

In a pressure resistant reactor equipped with a stirrer, a thermometer, a reflux cooling tube and a nitrogen gas inlet tube, 100 parts of polyisoprene (73% of cis-1,4 unit, 22% of trans-1, 4 unit, 5% of 3,4-unit, weight average molecular weight 243,100) pieces cut to a size which measured 10 mm on each side were introduced together with 374 parts of cyclohexane. The interior of the reactor was purged with nitrogen, and then the content of the reactor was heated to 75°C under stirring to completely dissolve the polyisoprene in cyclohexane. Subsequently, 0.95 part of p-toluenesulfonic acid (refluxed and dehydrated in toluene so that the moisture content would be 150 ppm or less) as a 15% toluene solution was added to the reactor, and while the temperature was controlled not to exceed 80°C, a cyclization reaction was carried out. After performing the reaction for 7 hours, a 25% aqueous solution of sodium carbonate containing 0.59 part of sodium carbonate was added to the reactor to terminate the reaction. Water was removed by azeotropic reflux dehydration at 80°C, and then catalyst residues in the system were removed using a glass fiber filter having a pore size of 2 µm. Cyclohexane was distilled off from the solution thus obtained, and toluene was removed by vacuum drying. Thus, a solid conjugated diene polymer cyclized product I was obtained. The weight average molecular weight of the conjugated diene polymer cyclized product I was 190, 800, the unsaturated bond reduction ratio was 64.6%, and the glass transition temperature was 60°C.

The solid conjugated diene polymer cyclized product I thus obtained was kneaded using a single-screw kneading extruder (40φ, L/D = 25, die diameter: 3 mm x 1 hole, manufactured by Ikegai Corp.), under the kneading conditions of cylinder 1: 140°C, cylinder 2: 150°C, cylinder 3: 160°, cylinder 4: 170°C, die temperature 170°C, and speed of rotation: 25 rpm, and then the kneading product was pelletized.

### [Preparation Example 2]

In a pressure resistant reactor equipped with a stirrer, a thermometer, a reflux cooling tube and a nitrogen gas inlet tube, 300 parts of polyisoprene (73% of cis-1,4 unit, 22% of trans-1, 4 unit, 5% of 3, 4-unit, weight average molecular weight 154,000) pieces cut to a size which measured 10 mm on each side were introduced together with 700 parts of cyclohexane. The interior of the reactor was purged with nitrogen, and then the content of the reactor was heated to 75°C under stirring to completely dissolve the polyisoprene in cyclohexane. Subsequently, 3. parts of p-toluenesulfonic acid (refluxed and dehydrated in toluene so that the moisture content would be 150 ppm or less) as a 15% toluene solution was added to the reactor, and while the temperature was controlled not to exceed 80°C, a cyclization reaction was carried out. After performing the reaction for 7 hours, a 25% aqueous solution of sodium carbonate containing 1.16 parts of sodium carbonate was added to the reactor to terminate the reaction. Water was removed by azeotropic reflux dehydration at 80°C, and then catalyst residues in the system were removed using a glass fiber filter having a pore size of 2 µm. Cyclohexane was distilled off from the solution thus obtained, and toluene was removed by vacuum drying. Thus, a solid conjugated diene polymer cyclized product II was obtained. The weight average molecular weight of the conjugated diene polymer cyclized product II was 142, 000, the unsaturated bond reduction ratio was 71.7%, and the glass transition temperature was 79°C. The conjugated diene polymer cyclized product II thus obtained was pelletized in the same manner as in the Preparation Example 1.

### [Example 1]

36 Parts of the pellets of the conjugated diene polymer cyclized product I obtained in Preparation Example 1, 60 parts of an ethylene-vinyl alcohol copolymer ("DC3203™", manufactured by Nippon Synthetic Chemical Industry Co., Ltd., ethylene unit content 32 mol%, MFR 3.8 g/10 min (210°C, under a load of 2160 g)), and 4 parts of liquid paraffin ("HICOL K-350™", manufactured by Kaneda Co., Ltd.) were kneaded using a twin-screw kneading machine ("ZE40A™", manufactured by KraussMaffei Berstorff GmbH), under the conditions of cylinder 1: 150°C, cylinder 2: 180°C, cylinder 3: 170°C, cylinder 4: 170°C, die temperature 180°C, and speed of rotation: 150 rpm, and then the kneading product was pelletized. Thus, pellets of a resin composition for a package to be subjected to heat sterilization of Example 1 were obtained. The resin composition for a package to be subjected to heat sterilization of Example 1 had a constitution in which an oxygen absorptive resin composition formed from the conjugated diene polymer cyclized product I and liquid paraffin was dispersed in an oxygen barriering matrix resin formed of an ethylene-vinyl alcohol copolymer. The resin composition for a package to be subjected to heat sterilization of Example 1 was used as a sample to measure the glass transition temperature, and the glass transition temperature of the oxygen absorptive resin composition included in the resin composition for a package to be subjected to heat sterilization was 36°C. The amounts of incorporation of the various components, and the glass transition temperature of the oxygen absorptive resin composition in the resin composition for a package to be subjected to heat sterilization of Example 1 are presented in Table 1.

**[Table 1]**

| | | Resin composition for a package to be subjected to heat sterilization | | | | | |
|---|---|---|---|---|---|---|---|
| | | Example 1 | Example 2 | Example 3 | Comparative Example 1 | Comparative Example 2 | Comparative Example 3 |
| Amount of incorporation (parts) | | | | | | | |
| Oxygen absorptive resin composition | Conjugated diene polymer cyclized product I | 36 | 36 | - | 36 | 33 | - |
| | Conjugated diene polymer cyclized product II | - | - | 34 | - | - | 30 |
| | Liquid paraffin | 4 | 4 | 4 | 4 | 7 | - |
| | Erucic acid | - | - | 2 | - | - | - |
| Matrix resin | Ethylene-vinyl alcohol copolymer | 60 | - | - | - | 60 | - |
| | Polyamide 6 | - | 60 | 60 | - | - | - |
| | Modified polyethylene terephthalate resin | - | - | - | 60 | - | - |
| | Linear low-density polyethylene resin | - | - | - | - | - | 70 |
| Glass transition temperature of oxygen absorptive resin composition (°C) | | 36 | 36 | 39 | 36 | 24 | 79 |

### [Example 2]

Pellets of a resin composition for a package to be subjected to heat sterilization of Example 2 were obtained in the same manner as in Example 1, except that 60 parts of polyamide 6 ("NOVAMID 1030™", manufactured by Mitsubishi Engineering-Plastics Corp., viscosity value: 246 ml/g) was used instead of 60 parts of an ethylene-vinyl alcohol copolymer, and the kneading conditions were changed to cylinder 1: 150°C, cylinder 2: 230°C, cylinder 3: 200°C, cylinder 4: 200°C, die temperature: 220°C, and speed of rotation: 150 rpm. This resin composition for a package to be subjected to heat sterilization of Example 2 had a constitution in which an oxygen absorptive resin composition formed from the conjugated diene polymer cyclized product I and liquid paraffin was dispersed in an oxygen barriering matrix resin formed of polyamide 6. The resin composition for a package to be subjected to heat sterilization of Example 2 was used as a sample to measure the glass transition temperature, and the glass transition temperature of the oxygen absorptive resin composition comprised in the resin composition for a package to be subjected to heat sterilization was 36°C. The amounts of incorporation of the various components and the glass transition temperature of the oxygen absorptive resin composition, in the resin composition for a package to be subjected to heat sterilization of Example 2, are presented in Table 1.

### [Example 3]

Pellets of a resin composition for a package to be subjected to heat sterilization of Example 3 were obtained in the same manner as in Example 2, except that 34 parts of the pellets of the conjugated diene polymer cyclized product II obtained in Preparation Example 2 were used instead of 36 parts of the pellets of the conjugated diene polymer cyclized product I, and 2 parts of erucic acid (manufactured by NOF Corp.) was further added thereto to perform kneading. This resin composition for a package to be subjected to heat sterilization of Example 3 had a constitution in which an oxygen absorptive resin composition formed from the conjugated diene polymer cyclized product II, liquid paraffin and erucic acid was dispersed in an oxygen barriering matrix resin formed of polyamide 6. The resin composition for a package to be subjected to heat sterilization of Example 3 was used as a sample to measure the glass transition temperature, and the glass transition temperature of the oxygen absorptive resin composition comprised in the resin composition for a package to be subjected to heat sterilization was 39°C. The amounts of incorporation of the various components and the glass transition temperature of the oxygen absorptive resin composition, in the resin composition for a package to be subjected to heat sterilization of Example 3, are presented in Table 1.

### [Comparative Example 1]

Pellets of a resin composition for a package to be subjected to heat sterilization of Comparative Example 1 were obtained in the same manner as in Example 1, except that 60 parts of a modified polyethylene terephthalate resin ("SKYGREEN S2008™", manufactured by SK Chemicals Co., Ltd.) was used instead of 60 parts of an ethylene-vinyl alcohol copolymer. This resin composition for a package to be subjected to heat sterilization of Comparative Example 1 had a constitution in which an oxygen absorptive resin composition formed from the conjugated diene polymer cyclized product I and liquid paraffin was dispersed in a matrix resin formed of a modified polyethylene terephthalate resin. The resin composition for a package to be subjected to heat sterilization of Comparative Example 1 was used as a sample to measure the glass transition temperature, and the glass transition temperature of the oxygen absorptive resin composition comprised in the resin composition for a package to be subjected to heat sterilization was 36°C. The amounts of incorporation of the various components and the glass transition temperature of the oxygen absorptive resin composition, in the resin composition for a package to be subjected to heat sterilization of Comparative Example 1, are presented in Table 1.

### [Comparative Example 2]

Pellets of a resin composition for a package to be subjected to heat sterilization of Comparative Example 2 were obtained in the same manner as in Example 1, except that the amount of the pellets of the conjugated diene polymer cyclized product I used was changed to 33 parts, and the amount of liquid paraffin used was changed to 7 parts. This resin composition for a package to be subjected to heat sterilization of Comparative Example 2 had a constitution in which an oxygen absorptive resin composition formed from the conjugated diene polymer cyclized product I and liquid paraffin was dispersed in an oxygen barriering matrix resin formed of an ethylene-vinyl alcohol copolymer. The resin composition for a package to be subjected to heat sterilization of Comparative Example 2 was used as a sample to measure the glass transition temperature, and the glass transition temperature of the oxygen absorptive resin composition comprised in the resin composition for a package to be subjected to heat sterilization was 24°C. The amounts of incorporation of the various components and the glass transition temperature of the oxygen absorptive resin composition, in the resin composition for a package to be subjected to heat sterilization of Comparative Example 2, are presented in Table 1.

### [Comparative Example 3]

Pellets of a resin composition for a package to be subjected to heat sterilization of Comparative Example 3 were obtained in the same manner as in Example 1, except that 30 parts of the pellets of the conjugated diene polymer cyclized product II were used instead of 36 parts of the pellets of the conjugated diene polymer cyclized product I, 70 parts of a linear low-density polyethylene resin ("ZM047™", manufactured by Ube Maruzen Polyethylene Co., Ltd.) was used instead of 60 parts of an ethylene-vinyl alcohol copolymer, and liquid paraffin was not used. This resin composition for a package to be subjected to heat sterilization of Comparative Example 3 had a constitution in which an oxygen absorptive resin composition formed from the conjugated diene polymer cyclized product II was dispersed in a matrix resin formed of a linear low-density polyethylene resin. The resin composition for a package to be subjected to heat sterilization of Comparative Example 3 was used as a sample to measure the glass transition temperature, and the glass transition temperature of the oxygen absorptive resin composition comprised in the resin composition for a package to be subjected to heat sterilization was 79°C. The amounts of incorporation of the various components and the glass transition temperature of the oxygen absorptive resin composition, in the resin composition for a package to be subjected to heat sterilization of Comparative Example 3, are presented in Table 1.

### [Example 4]

A film having three layers of an adhesive layer (thickness 20 µm) formed of a modified polyolefin resin/an oxygen absorbing layer (thickness 20 µm) formed from a resin composition for a package to be subjected to heat sterilization/a sealant layer (thickness 20 µm) formed of a modified polyolefin resin was obtained by performing multilayer inflation forming while using the resin composition for a package to be subjected to heat sterilization obtained in Example 1 and a commercially available modified polyolefin resin ("MODIC F532™", manufactured by Mitsubishi Chemical Corp.) and using an extrusion molding machine equipped with a T-die (manufactured by Soukenshya Co., Ltd., die width: 300 mm, orifice diameter: 25 mm), under the conditions of cylinder temperature: 200°C to 210°C, adaptor temperature: 210°C, die temperature: 210°C, speed of rotation: 50 rpm, speed of take-up: 2.0 m/min, and take-up roll temperature: 75°C. Subsequently, the film having three layers thus obtained and a transparent silica deposited film ("TECHBARRIER T™", manufactured by Mitsubishi Plastics, Inc.) were stacked, and then the films were folded. Subsequently, while the respective layers were adhered by a dry lamination system using a hot laminator ("EXCELAM-3550™", manufactured by GMP Co. , Ltd.) under the conditions of roll temperature: 120°C, the sealant layer was heat sealed to carry out a three-side seal. Thus, a pouch of Example 4 having a size of 100 mm × 150 mm, constructed from a film for a package to be subjected to heat sterilization having a configuration of an oxygen barrier layer formed from a transparent silica deposited film/adhesive layer/oxygen absorbing layer/sealant layer, from the outside, was obtained.

In one of the pouches of Example 4 thus obtained, 1 cc of water and 100 cc of dry air (oxygen concentration 20.7%) at room temperature were introduced, and then the opening sides of the pouch were tightly sealed by heat sealing. The pouch was left to stand for 30 days in a dryer at 60°C. After leaving the pouch to stand for 30 days, the oxygen concentration inside the pouch was measured, and the amount of oxygen (V₀) absorbed into the pouch was determined from the measured value. In another pouch of Example 4, only 100 cc of dry air (oxygen concentration 20.7%) was introduced at room temperature, and then the opening sides of the pouch were tightly sealed by heat sealing. The pouch was left for 3 days in a dryer at 60°C. After leaving the pouch to stand for 3 days, the oxygen concentration inside the pouch was measured, and the amount of oxygen (Vₐ) absorbed into the pouch was determined from the measured value. The oxygen absorption capacity reduction ratio under aging conditions which was determined as the value of the formula (Vₐ/V₀) × 100 was 8%. Furthermore, in another pouch of Example 4, 1 cc of water and 8 cc of dry air at room temperature (oxygen concentration 20.7%) were introduced, and then the opening sides of the pouch were tightly sealed by heat sealing, and the pouch was subjected to a retort treatment for 30 minutes at 121°C, using a retort sterilization apparatus ("retorting autoclaved sterilization apparatus RK-3030™", manufactured by ALP Co., Ltd.). After the retort treatment for 30 minutes, the oxygen concentration inside the pouch was measured, and the oxygen concentration was 0.85%. Furthermore, odor inside the pouch after the retort treatment was evaluated, and the odor level was 1. The oxygen absorption capacity reduction ratio under aging conditions, the oxygen concentration after a retort treatment, and the odor level after the retort treatment, of the pouches of Example 4 are summarized in Table 2.

**[Table 2]**

| | Film for a package to be subjected to heat sterilization (pouch) | | | | | |
|---|---|---|---|---|---|---|
| | Example 4 | Example 5 | Example 6 | Comparative Example 4 | Comparative Example 5 | Comparative Example 6 |
| Oxygen absorbing layer (resin composition for a package to be subjected to heat sterilization used) | Example 1 | Example 2 | Example 3 | Comparative Example 1 | Comparative Example 2 | Comparative Example 3 |
| Oxygen barrier layer | Transparent silica deposited film "TECHBARRIER T™" | Aluminum deposited film "VM-PET 1319 (#12)™" | Transparent silica deposited film "TECHBARRIER NR™" | Transparent silica deposited film "TECHBARRIER T™" | Transparent silica deposited film "TECHBARRIER T™" | Transparent silica deposited film "TECHBARRIER T™" |
| Oxygen absorption capacity reduction ratio under aging conditions (%) | 8 | 10 | 10 | 50 | 40 | 30 |
| Oxygen concentration after retort treatment (%) | 0.85 | 0.80 | 0.95 | 7.8 | 0.70 | 4.1 |
| Odor level after retort treatment | 1 | 1 | 1 | 3 | 3 | 5 |

### [Example 5]

A pouch of Example 5 was obtained in the same manner as in Example 4, except that the resin composition for a package to be subjected to heat sterilization was changed to the resin composition obtained in Example 2, and an aluminum deposited film ("VM-PET 1319 (#12)™", manufactured by Toray Advanced Film Co., Ltd.) was used instead of the transparent silica deposited film. For this pouch of Example 5, the same measurements as those obtained in Example 4 were made. The oxygen absorption capacity reduction ratio under aging conditions, the oxygen concentration after a retort treatment, and the odor level after a retort treatment of the pouch of Example 5 are presented in Table 2.

### [Example 6]

A pouch of Example 6 was obtained in the same manner as in Example 4, except that the resin composition for a package to be subjected to heat sterilization was changed to the resin composition obtained in Example 3, and "TECHBARRIER NR™" (manufactured by Mitsubishi Plastics, Inc.) was used as the transparent silica deposited film. For this pouch of Example 6, the same measurements as those obtained in Example 4 were made. The oxygen absorption capacity reduction ratio under aging conditions, the oxygen concentration after a retort treatment, and the odor level after a retort treatment of the pouch of Example 6 are presented in Table 2.

### [Comparative Example 4]

A pouch of Comparative Example 4 was obtained in the same manner as in Example 4, except that the resin composition for a package to be subjected to heat sterilization was changed to the resin composition obtained in Comparative Example 1. For this pouch of Comparative Example 4, the same measurements as those obtained in Example 4 were made. The oxygen absorption capacity reduction ratio under aging conditions, the oxygen concentration after a retort treatment, and the odor level after a retort treatment of the pouch of Comparative Example 4 are presented in Table 2.

### [Comparative Example 5]

A pouch of Comparative Example 5 was obtained in the same manner as in Example 4, except that the resin composition for a package to be subjected to heat sterilization was changed to the resin composition obtained in Comparative Example 2. For this pouch of Comparative Example 5, the same measurements as those obtained in Example 4 were made. The oxygen absorption capacity reduction ratio under aging conditions, the oxygen concentration after a retort treatment, and the odor level after a retort treatment of the pouch of Comparative Example 5 are presented in Table 2.

### [Comparative Example 6]

A pouch of Comparative Example 6 was obtained in the same manner as in Example 4, except that the resin composition for a package to be subjected to heat sterilization was changed to the resin composition obtained in Comparative Example 3. For this pouch of Comparative Example 6, the same measurements as those obtained in Example 4 were made. The oxygen absorption capacity reduction ratio under aging conditions, the oxygen concentration after a retort treatment, and the odor level after a retort treatment of the pouch of Comparative Example 6 are presented in Table 2.

It can be said that the values of V₀ measured for the pouches of Examples 4 to 6 and Comparative Examples 4 to 6 are equivalent to the respective oxygen absorption capacity possessed by the pouches, and the values of Vₐ are equivalent to the oxygen absorption capacity consumed in the aging process (60°C, for 3 days) under low humidity (0% RH). Therefore, it is implied that as the oxygen absorption capacity reduction ratio under aging conditions which can be determined as the value of the formula: (Va/V₀) × 100 is smaller, a decrease in the oxygen absorption capacity in the aging process or the like until the time of a heat sterilization treatment is prevented. Furthermore, it is implied that as the oxygen concentration after a retort treatment is lower, a sufficient oxygen absorption capacity is exhibited at the time of a heat sterilization treatment. Therefore, as can be seen from Table 2, it can be said that in the pouches (Examples 4 to 6) constructed from the films for a package to be subjected to heat sterilization obtained by using the resin composition for a package to be subjected to heat sterilization of the present invention, a decrease in the oxygen absorption capacity until the time of a heat sterilization treatment is prevented, a sufficient oxygen absorption capacity is exhibited at the time of heat sterilization treatment, and odor that is generated along with oxygen absorption is suppressed. On the other hand, in the pouch obtained using a composition in which the matrix resin was a modified polyethylene terephthalate resin (Comparative Example 4), or in the pouch obtained using a composition in which the matrix resin was a linear low-density polyethylene resin (Comparative Example 6), the oxygen absorption capacity reduction ratios under aging conditions were high, the oxygen absorption capacity was likely to decrease until the time of a heat sterilization treatment, the oxygen concentrations after a retort treatment were high, and the pouches did not exhibit sufficient oxygen absorption capacity at the time of a heat sterilization treatment. Furthermore, these pouches had high levels of odor after a retort treatment, and the suppression of odor generated along with oxygen absorption was insufficiently achieved. Also, in the pouch obtained using a composition composed of an oxygen absorptive resin composition having an excessively low glass transition temperature (Comparative Example 5), the oxygen absorption capacity reduction ratio under aging conditions was high, the oxygen absorption capacity was likely to decrease until the time of a heat sterilization treatment, the pouch had a high level of odor after a retort treatment, and the suppression of odor generated along with oxygen absorption was insufficiently achieved.

## Claims

1. A resin composition for a package to be subjected to heat sterilization, comprising an oxygen absorptive resin composition dispersed in an oxygen barriering matrix resin,
**characterized in that** the oxygen absorptive resin composition comprises a conjugated diene polymer cyclized product, the oxygen absorptive resin composition has a glass transition temperature of 31°C to 55°C, and the oxygen barriering matrix resin is at least one resin selected from an ethylene-vinyl alcohol copolymer resin and a polyamide resin.

2. A film for a package to be subjected to heat sterilization, comprising an oxygen absorbing layer that is formed from the resin composition for a package to be subjected to heat sterilization according to claim 1, a sealant layer that is laminated on a first surface side of the oxygen absorbing layer, and an oxygen barrier layer that is laminated on a second surface side of the oxygen absorbing layer.

3. A packaging container constructed from the film for a package to be subjected to heat sterilization according to claim 2.

4. A method for sterilization, comprising steps of packaging a content using the packaging container according to claim 3, and subjecting the packaging container containing the content to heat sterilization.

5. A method for producing the film for a package to be subjected to heat sterilization of claim 2, comprising a laminate step of the oxygen absorbing layer and the oxygen barrier layer by:
adhering the oxygen absorbing layer and the oxygen barrier layer by a dry lamination system, with a laminate adhesive layer interposed therebetween, and then
aging an adhered laminate under the conditions of a temperature of 40°C to 60°C and a relative humidity of 0% to 65%. film for a package to be subjected to heat sterilization
